# EUROPEAN PATENT APPLICATION

(11) **EP 4 763 670 A1**
(43) Date of publication of application: **24.06.2026**
(21) Application number: 24221542.4
(22) Date of filing: 19.12.2024
(51) Int. Cl.: B62D 6/00

(54) **METHOD FOR OPERATING A STEERING SYSTEM FOR A VEHICLE, DATA PROCESSING APPARATUS, COMPUTER PROGRAM, COMPUTER-READABLE STORAGE MEDIUM, STEERING SYSTEM, AND VEHICLE**

(71) Applicant: Volvo Car Corporation, 405 31 Göteborg (SE)
(72) Inventor: HANSSON, Anders, 40531 Göteborg (SE); KLOMP, Matthijs, 40531 Göteborg (SE)
(74) Representative: Kransell & Wennborg KB

(57) **Abstract**

The disclosure relates to a method for operating a steering system for a vehicle, wherein the steering system is operable in at least two steering capability modes, each steering capability mode characterized by at least one steering capability limit, wherein the method comprises: obtaining data indicative of the steering system reaching the steering capability limit of a steering capability mode of the at least two steering capability modes; and in response to obtaining the data, causing a corresponding feedback to the driver via a torque of a steering wheel of the car. Further, the present disclosure relates to a corresponding data processing apparatus, a corresponding computer program, and a corresponding computer-readable storage medium. Additionally, the present disclosure relates to a steering system for a vehicle and to the vehicle.

## Description

### TECHNICAL FIELD

The present disclosure relates to a method for operating a steering system for a vehicle. Further, the present disclosure relates to a corresponding data processing apparatus, a corresponding computer program, and a corresponding computer-readable storage medium. Additionally, the present disclosure relates to a steering system for a vehicle and the vehicle.

### BACKGROUND ART

Steering guidance systems are increasingly being incorporated into vehicles for several important reasons such as safety enhancement, improved driving experience, driving efficiency etc. Within this scope, identification and mitigation of steering failures of risks of steering failures has become more and more necessary as well.

### SUMMARY

It is therefore an objective of the present disclosure to improve operating of a steering system for a vehicle.

The problem is at least partially solved or alleviated by the subject matter of the independent claims of the present disclosure, wherein further examples are incorporated in the dependent claims.

According to a first aspect, there is provided a method for operating a steering system for a vehicle, wherein the steering system is operable in at least two steering capability modes, each steering capability mode characterized by at least one steering capability limit, wherein the method comprises: obtaining data indicative of the steering system reaching the steering capability limit of a steering capability mode of the at least two steering capability modes; and in response to obtaining the data, causing a corresponding feedback to the driver via a torque of a steering wheel of the vehicle.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to an example of the present disclosure, the feedback regarding the capability limit comprises at least one of the following: causing increasing the torque of the steering wheel; causing increasing the torque of the steering wheel proportional to a deviation from the steering capability limit; causing increasing the torque of the steering wheel up to a torque limit; causing increasing the torque of the steering wheel up to a torque limit and, if the torque limit is reached, causing a drop in the torque; and/or causing a vibration of the steering wheel.

According to an example of the present disclosure, the feedback further comprises at least one of the following: causing the vibration of the steering wheel upon the increasing of the torque of the steering wheel; causing the vibration of the steering wheel upon the increasing of the torque of the steering wheel proportional to a deviation from the steering capability limit; causing the vibration of the steering wheel upon the increasing of the torque of the steering wheel up to a torque limit.

According to an example of the present disclosure, the feedback further comprises at least one of the following: causing decreasing the torque of the steering wheel upon the increasing of the torque of the steering wheel; causing decreasing the torque of the steering wheel upon the increasing of the torque of the steering wheel proportional to a deviation from the steering capability limit; causing decreasing the torque of the steering wheel upon the increasing of the torque of the steering wheel up to a torque limit.

According to an example of the present disclosure, the feedback further comprises causing the vibration of the steering wheel upon the decreasing of the torque of the steering wheel.

According to an example of the present disclosure, if the indication further indicates that the driver is steering outside a maximum steering capability limit of the at least one steering capability limit, the method further comprises providing to the driver a notification indicative of the steering outside the maximum steering capability limit and/or providing to the driver a steering guidance.

According to an example of the present disclosure, each steering capability limit of the at least one steering capability limit is defined by a virtual model of one or several virtual capability limits (corresponding to degraded performance instead of actual performance) and corresponding vehicle speed and at least one of the following: temperature measurement/estimation (ambient, system, etc.), faults, age, voltage, , corresponding steering wheel angle, corresponding steering wheel angle speed,.

According to an example of the present disclosure, the at least two steering capability modes comprise a maximum steering capability mode and wherein the corresponding feedback is caused to the driver if the data is indicative of the steering system reaching the steering capability limit of the steering capability mode that is different from the maximum steering capability mode.

According to a second aspect, there is provided a data processing apparatus comprising means for carrying out the method of the first aspect.

According to a third aspect, there is provided a computer program comprising instructions which, when the program is executed by a computer, cause the computer to carry out the method of the first aspect.

According to a fourth aspect, there is provided a computer-readable storage medium comprising instructions which, when executed by a computer, cause the computer to carry out the method of the first aspect.

According to a fifth aspect, there is provided a steering system for a vehicle comprising a data processing apparatus of the second aspect or being configured for carrying out the steps of a method of the first aspect.

According to a sixth aspect, there is provided a vehicle comprising a data processing apparatus of the second aspect or being configured for carrying out the steps of a method of the first aspect.

According to a third aspect, there is provided a system,

According to a fourth aspect, there is provided a computer program element for operating a haptic system, which, when being executed by a processing unit, is adapted to perform the method steps of the first aspect.

According to a fifth aspect, there is provided a computer-readable medium having stored the computer program element of the fourth aspect.

It should be noted that the above examples may be combined with each other irrespective of the aspect involved. Accordingly, the method may be combined with structural features and, likewise, the apparatus and the system may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a steering system according to an example of the present disclosure;
- Figure 2: shows steering capability and steering capability modes both obtained based on different steering capability factors according to an example of the present disclosure;
- Figure 3: shows consideration of different steering capabilities according to an example of the present disclosure;
- Figure 4: shows exemplary steering capability modes according to an example of the present disclosure;
- Figure 5: shows exemplary paths/trajectories respectively, which the vehicle may drive in steering capability modes according to an example of the present disclosure;
- Figure 6: shows three exemplary steering capability modes according to an example of the present disclosure;
- Figure 7: exemplary visualizes the intensity or values of the steering wheel torque provided as a feedback according to an example of the present disclosure;
- Figure 8: visualizes an example of a torque feedback provided according to an example of the present disclosure;
- Figure 9: visualizes an example of a torque feedback provided according to an example of the present disclosure;
- Figure 10: visualizes a data processing apparatus according to an example of the present disclosure; and
- Figure 11: visualizes steps of a method according to an example of the present disclosure.

### DETAILED DESCRIPTION

The Figures are merely schematic representations and serve only to illustrate examples of the disclosure. Identical or equivalent elements are in principle provided with the same reference signs.

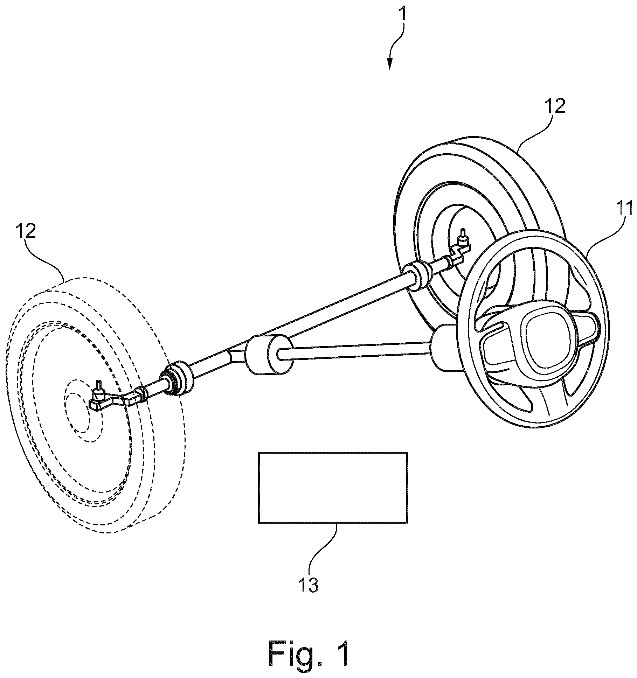

Figure 1 schematically shows a steering system 1 according to an example of the present disclosure. The steering of a vehicle as such is generally well-known. In the steering system 1, the driver provides inputs via a steering component, for example, rotational inputs via a steering wheel 11, and, thereby, indicates the driving direction, which the vehicle should drive. The driver's inputs are converted into lateral movement of the front wheels 12 of the vehicle to the left or to the right, enabling the vehicle to drive to the left or to the right correspondingly. Correspondingly, in the example of Figure 1, driver's rotational inputs provided by the driver by using (turning) the steering wheel 11 are translated into the movements of the vehicle's front wheels 12 for driving. In the example of Figure 1, the vehicle has two front wheels 12. The vehicle, however, is not limited to two front wheels and may comprise one or more front wheels, moved depending on driver's inputs.

According to the example of Figure 1, the steering system 1 comprises a data processing apparatus 13. The data processing apparatus 13 of the example of Figure 13 may be arranged for obtaining data indicative of a steering capability of the steering system 1.

A steering capability generally refers to the vehicle's ability to change direction and maneuver effectively in response to driver's input(s) via the steering wheel 11 of the vehicle. For example, the steering capability may be expressed by values indicating the steering system's 1 ability to cause moving the front wheels 12 of the vehicle in response to driver's inputs via vehicle's steering wheel 11 when driving the vehicle.

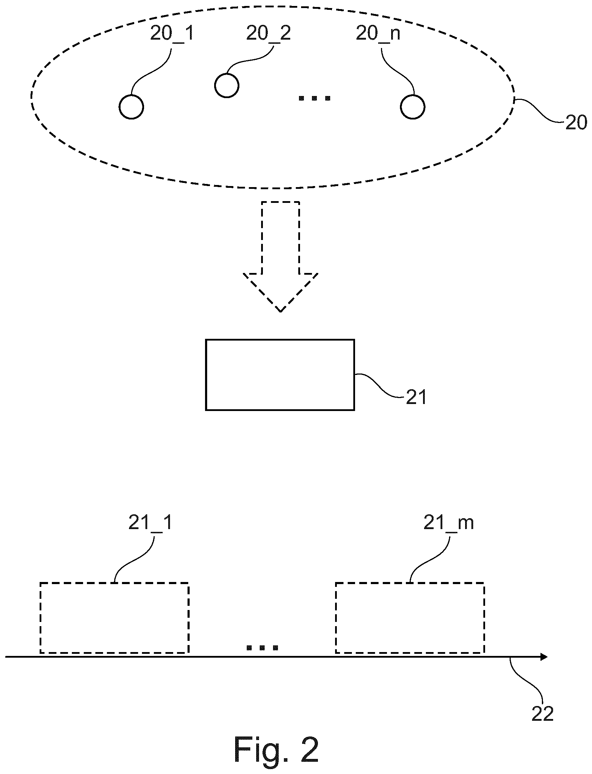

The steering capability may be obtained based on different steering capability factors. Correspondingly, the data processing apparatus 13 may be arranged to obtain the different factors as data indicative of the steering capability of the steering system 1 and then to obtain the steering capability based on the factors. Figure 2 exemplary shows a set of steering capability factors 20, based on which a steering capability 21 may be characterized or defined respectively. The set of steering capability factors 20 may comprise at least one steering capability factor 20_1, 20_2, ..., 20_n, wherein n ≥ 1. The steering capability factors 20_1, 20_2, ..., 20_n, which may be used for characterizing a steering capability 21, may comprise physical steering capability factors and/or virtual steering capability factors.

Physical steering capability factors may comprise factors such as deviation between the calculated target steering travel and actual steering travel, vehicle's speed, vehicle's turning radius, steering wheel angle, steering wheel angle speed, and/or lateral acceleration, for example. When using the physical factors only for characterizing the steering capability 21, the steering capability 21 may be referred to as physical steering capability.

Virtual steering capability factors may comprise factors such as voltage level, temperature (ambient and/or internal), age, accumulated usage level etc. Voltage level in a vehicle's electrical system can significantly influence its steering capability 21, for example, in vehicles with electric power steering (EPS) systems. Temperature (e.g., ambient and/or internal) may affect components of the steering system 1 or components associated with the steering system 1. For example, high temperatures may cause the steering electric motor power to be reduced. High temperatures overheating of the power steering system 1 and diminish the effectiveness of the vehicle's power steering capability 21. Further, heat can degrade or damage electronic, rubber and plastic components in the steering system 1. This may lead to leaks or reduced performance over time. When temperatures are low, these materials can become brittle and prone to cracking. Similarly, also vehicle's and/or vehicle's wheel 12 age has influence on functionality of the steering system 1. When using the virtual factors only for characterizing the steering capability 21, the steering capability 21 may be referred to as virtual steering capability.

The present disclosure allows consideration of any one of the steering capability factors 20_1, 20_2, ..., 20_n in the set 20 and, thus, allows a flexible designing of an appropriate steering capability 21 that is used for determining vehicle's ability to change direction and maneuver effectively in response to driver's input via the steering wheel 11 of the vehicle. Thus, at least one factor 20_1, 20_2, ..., 20_n of the set 20 may characterize (or defies respectively) the steering capability 21. The value of the steering capability 21 may be based on the at least one factor 20_1, 20_2, ..., 20_n characterizing the steering capability 21. For example, the value of the steering capability 21 may be determined as a function over the respective at least one factor 20_1, 20_2, ..., 20_n. In case of using only one factor 20_1, 20_2, ..., 20_n for characterizing the steering capability 21, the value of the steering capability 21 may correspond to the value of the respective factor 20_1, 20_2, ..., 20_n or the value of the steering capability 21 may be determined as a function over the respective factor 20_1, 20_2, ..., 20_n. Generally, the meaning of the steering capability 21 as such is known. Correspondingly, the skilled person is aware on methods for determining a steering capability 21 based on at least one of the different factors 20_1, 20_2, ..., 20_n.

The data processing apparatus 13 may obtain information on the at least one factor 20_1, 20_2, ..., 20_n characterizing the steering capability 21 (e.g., values of the at least one factor 20_1, 20_2, ..., 20_n) and determine the value of the steering capability 21.

The steering capability 21 may have different values. A determined (current) value may depend on circumstances associated with the (current) operating of the steering system 1 (i.e. of operating and/or steering the vehicle) because also the (current) at least one factor 20_1, 20_2, ..., 20_n, which characterize the steering capability 21 and which may be any one of the above-discussed virtual and/or physical steering capability factors, may likewise depend on the circumstances associated with the (current) operating of the steering system. For example, physical factor such as speed etc. or virtual factor such as temperature are factors that do not have fixed values and should be determined with regard to a given (current) situation.

Thus, for a steering capability 21, different ranges or levels 21_1, ..., 21_m (at least two) of steering capability values 22 (m ≥ 2), may be present and, thus, may be pre-defined, i.e. (pre-) determined in advance with regard to possible values, which the least one factor 20_1, 20_2, ..., 20_n characterizing/defining the steering capability 21 may (hypothetically) have.

Correspondingly, the steering system 1 is generally operable in at least some of the different ranges or levels 21_1, ..., 21_m of the steering capability 21. In the present disclosure, the different ranges or levels 21_1, ..., 21_m of values of the steering capability 21 are referred to as steering capability modes.

According to the present disclosure, the steering system 1 is operable in at least two steering capability modes 21_1, ..., 21_m, each defining a range of values, which the steering capability 21 may have when the steering system 1 is operated. Each steering capability mode 21_1, ..., 21_m is characterized by at least one steering capability limit (e.g., a lower and/or upper limit of the respective value range/level 21_1, ..., 21_m, an average value of the respective value range/level 21_1, ..., 21_m etc.). As the steering capability 21 characterizes the operability of the steering system 1, the at least one steering capability limit of a steering capability mode 21_1, ..., 21_m may indicate a limit of operability of the steering system 1 with regard to the respective steering capability mode 21_1, ..., 21_m. Depending on its values 22, each steering capability mode 21_1, ..., 21_m may be less or more critical for the operation of the steering system 1 than another steering capability mode 21_1, ..., 21_m. A critical steering capability mode 21_1, ..., 21_m means occurrence, possibility or probability of occurrence of at least one failure and/or fault in the operation of the steering system 1, which may lead to a decrease of the operability of the steering system 1 or even inoperability of the steering system 1. A more critical steering capability mode 21_1, ..., 21_m may be associated with at least one (possible or probable) fault in the steering system 1 and/or at least one (possible or probable) steering fault(s) made by the driver. The faults indicated may be associated with the factor(s) 20_1, 20_2, ..., 20_n, characterizing the steering capability 21. For example, if the steering capability 21 is associated with factors such as vehicle turning radius, corresponding steering wheel angle, corresponding steering wheel angle speed, and/or corresponding lateral acceleration, the faults indicated will be associated with at least one of said factors. In said example, the faults may be inappropriate vehicle turning radius, inappropriate steering wheel angle, too large speed etc.

For example, the at least two steering capability modes 21_1, ..., 21_m may comprise a fully functional mode, which may have an optimal steering capability, which means that steering control may be maintained even in the event of a single failure. Further, besides the fully functional mode with the optimal steering capability, one or more degraded level steering capability modes may exist. In each one of degraded level steering capability modes, the steering capability may degrade gradually. For example, when considering two degraded level steering capability modes, in both the steering capability will be poorer than in the fully functional steering capability mode. Further, the steering capability of a first degraded level steering capability mode will be better than the steering capability of a second degraded level steering capability mode, i.e. the steering capability of the second degraded level steering capability mode will be worse than the steering capability of the first degraded level steering capability mode due to the gradual degradation of the steering capability among the degraded level steering capability modes.

In view of the aforesaid, like the steering capability 21, each steering capability limit may be characterized or defined respectively by the at least one factor 20_1, 20_2, ..., 20_n characterizing the steering capability 21. The at least one corresponding factor 20_1, 20_2, ..., 20_n may be a physical and/or virtual steering capability factor as indicated above. Thus, when knowing the at least one factor 20_1, 20_2, ..., 20_n characterizing the steering capability 21 during the operation of the steering system 1, it may be determined whether the steering system 1 is reaching a steering capability limit of a steering capability mode 21_1, ..., 21_m of the at least two steering capability modes 21_1, ..., 21_m. For this, information on (e.g., values of) the at least one factor 20_1, 20_2, ..., 20_n may be obtained during the operation of the steering system 1. As the information is obtained during the operation of the steering system 1, the information may be referred to as current information. By use of the (current) information on (e.g., (current) values of) the at least one factor 20_1, 20_2, ..., 20_n, the (current) steering capability 21 of the steering system 1, i.e. the (current) steering capability mode 21_1, ..., 21_m associated with the (current) operation of the steering system 1 may be obtained (determined). Correspondingly, data indicative of the steering system 1 reaching a steering capability limit of the (current) steering capability mode 21_1, ..., 21_m may be obtained (determined).

In view of the aforesaid, the data processing apparatus 13 obtains (during operation of the steering system 1) data indicative of the steering system 1 reaching a steering capability limit of a steering capability mode 21_1, ..., 21_m of the at least two steering capability modes 21_1, ..., 21_m.

For example, the data processing apparatus 13 may obtain information on the at least one factor 20_1, 20_2, ..., 20_n characterizing the steering capability 21 (e.g., values of the at least one factor 20_1, 20_2, ..., 20_n). The data processing apparatus 13 may, for example, determine the value of the steering capability 21. By knowing the value of the steering capability 21, the data processing apparatus 13 may determine, as relevant steering capability mode 21_1, ..., 21_m, the steering capability mode 21_1, ..., 21_m, to which of the steering capability modes 21_1, ..., 21_m the value of the steering capability 21 belongs. Thus, the data processing apparatus 13 may determine the relevant steering capability mode 21_1, ..., 21_m associated with the (current) operation of the steering system 1.

Further, in the same way, the data processing apparatus 13 may obtain data indicative of the steering system 1 reaching a steering capability limit of a steering capability mode 21_1, ..., 21_m. For example, the data processing apparatus 13 may determine that the steering system 1 is reaching a steering capability limit of a steering capability mode 21_1, ..., 21_m by comparing the value of the steering capability 21 with the steering capability limit of a steering capability mode 21_1, ..., 21_m. This may mean that the steering system 1 is reaching a limit of operation of the steering system 1 in the respective steering capability mode 21_1, ..., 21_m. This may be relevant for a safe and reliable operating of the steering system 1 in cases, where the steering capability mode 21_1, ..., 21_m covers steering capability 21 values 22 that are critical for a safe and reliable operating of the steering system 1, e.g. that indicate that the operation of the steering system 1 becomes limited or may fail.

Thus, when the data processing apparatus 13 obtains data indicative of the steering system 1 reaching a steering capability limit of a steering capability mode 21_1, ..., 21_m (e.g., of a steering capability mode 21_1, ..., 21_m, which is relevant for a safe operating of the steering system 1), the data processing apparatus 13 causes a corresponding feedback to the driver via a torque of the steering wheel 11 of the vehicle. Thereby, the steering system 1 indicates to the driver that the operation of the steering system 1 is approaching certain operation limits in view of (current) physical and/or virtual factor(s) 20_1, 20_2, ..., 20_n characterizing the steering capability 21 and thus also the respective steering capability mode 21_1, ..., 21_m and its limit. The feedback indicates that changes in said factor(s) are required. Such changes could be, for example, decreasing the driving speed, amending the steering angle, etc.

For example, there may be a situation where, until obtaining data indicative of the steering system 1 reaching the steering capability limit of a steering capability mode 21_1, ..., 21_m, the steering system 1 was operated in another steering capability mode 21_1, ..., 21_m having a better steering capability 21 than the steering capability mode 21_1, ..., 21_m, with regard to which it is determined that the steering system 1 is reaching its steering capability limit. In this situation, the operation of the steering system 1 may change from a steering capability mode 21_1, ..., 21_m with a better steering capability to a steering capability mode 21_1, ..., 21_m with a worse steering capability. Thus, the obtaining of the data indicative of the steering system 1 reaching the steering capability limit of a steering capability mode 21_1, ..., 21_m may indicate that situation. The output of a corresponding feedback may then indicate, via the torque of the steering wheel 10 of the vehicle, to the driver of the vehicle that the steering capability is degrading/decreasing. Thus, the driver should take corresponding appropriate countermeasures to stay within the actual or desired steering capability 21, e.g., to return to the steering capability mode 21_1, ..., 21_m with the better steering capability.

It has to be indicated that the provision of a feedback via a torque of the steering wheel 11 of the vehicle as such is well-known. The feedback is referred to also as feedback torque and refers to force experienced on the steering wheel 11, allowing drivers to sense the road feel and steering dynamics. In conventional systems, for example, this torque is generated from the interaction between the tire(s) and road surface, transmitted through a mechanical column shaft of the steering system 1. In steer-by-wire systems, where the mechanical connection via the mechanical column shaft is removed, feedback torque is artificially generated to mimic the natural steering feel. This may be achieved by using corresponding at least one control algorithms and at least one electronic system that simulate the resistance and feedback typically felt in traditional steering mechanisms. According to the present disclosure any one of the known and appropriate methods and/or mechanisms for providing the feedback via the torque of the steering wheel 11 may be implemented.

By the above-described methodology of providing feedback when a steering capability limit of a steering capability mode 21_1, ..., 21_m of the at least two steering capability modes 21_1, ..., 21_m, different stages of ensuring that the steering system 1 will operate properly may be implemented. The steering capability modes 21_1, ..., 21_m are different and different steering capability limits may be implemented by the different steering capability modes 21_1, ..., 21_m. Thereby, the driver may be warned by the feedback torque in good time with regard to possible fault(s) in the steering system 1 and/or possible steering fault(s) made by the driver. A first steering feedback, indicating a corresponding fault, will be with respect to a less critical steering capability mode 21_1, ..., 21_m. The driver can correct the steering and/or may take in consideration or fix the fault in the steering system 1 in good time before limit(s) of a most critical steering capability mode 21_1, ..., 21_m are reached. As indicated above, fault(s) indicated may be associated with the factor(s) 20_1, 20_2, ..., 20_n, characterizing the steering capability 21.

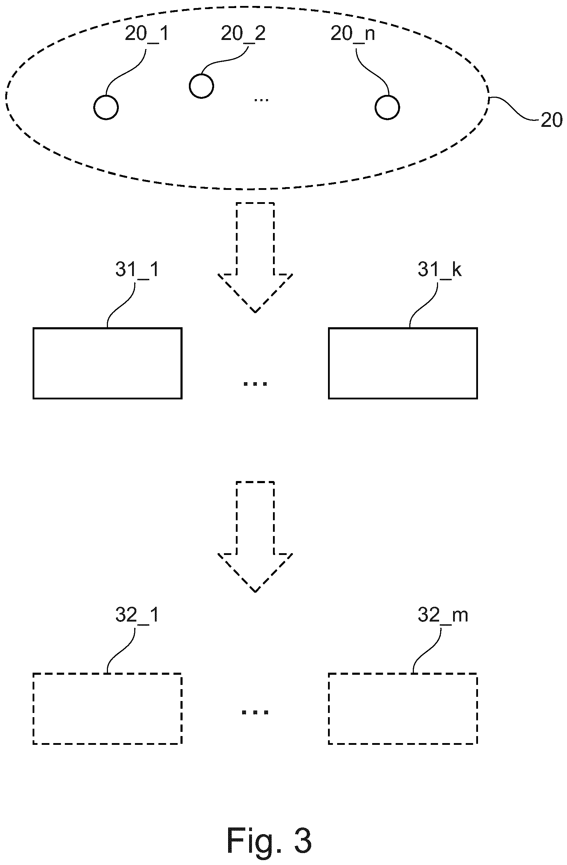

When providing torque feedback for indicating that the steering system 1 is operated in a mode 21_1, ..., 21_m critical for a safe and reliable operating of the steering system 1, steering capability modes 21_1, ..., 21_m may be considered that reflect that the operation of the steering system 1 becomes limited or may fail, i.e. that indicate that fault(s) in the steering system 1 may occur or have occurred. Therefore, according to an example of the present disclosure different steering capabilities 21, each characterized/defined by different sets of factors 20_1, 20_2, ..., 20_n (i.e., at least one corresponding factor 20_1, 20_2, ..., 20_n), may be used. This is indicated in example of Figure 3.

In the example of Figure 3, different steering capabilities 31_1 to 31_k (k > 2) are obtained based on the steering capability factors 20_1, 20_2, ..., 20_n in the set 20. Each steering capability 31_1 to 31_k is characterized/defined by a sub-set of steering capability factors 20_1, 20_2, ..., 20_n (i.e. at least one steering capability factor 20_1, 20_2, ..., 20_n), which is different from a sub-set of steering capability factors 20_1, 20_2, ..., 20_n defining another steering capability 31_1 to 31_k.

Each one of the steering capabilities 31_1 to 31_k will provide a corresponding set of steering capability modes 21_1, ..., 21_m (as described with regard to Figure 2) covering a corresponding range of values of the respective steering capability 31_1 to 3 1_k. According to the example of Figure 3, only steering capability modes of the steering capabilities 31_1 to 31_k are taken into account that represent a critical, faulty, and/or unreliable operation of the steering system 1 (in view of the data on the factors 20_1, 20_2, ..., 20_n defining the steering capabilities). These steering capability modes are indicated by references 32_1 to 32_m in Figure 3, wherein m > 1.

Thus, when considering the at least two steering capability modes 32_1 to 32_m, the data processing apparatus 13 will obtaining data indicative of the steering system reaching or predicting a steering capability limit of a steering capability mode 32_1 to 32_m, which indicates a critical, faulty, and/or unreliable operation of the steering system 1. In response to obtaining the data, the data processing apparatus 13 will cause a corresponding feedback to the driver via a torque of a steering wheel 11 of the vehicle for informing the driver that the operation of the steering system 1 is critical, faulty, and/or unreliable.

According to another example of the present disclosure, only one steering capability 31_1 may be considered and, likewise, only steering capability modes 32_1 to 32_m of the steering capability 31_1 may taken into account that represent a critical, faulty, and/or unreliable operation of the steering system 1 (in view of the data on the factors 20_1, 20_2, ..., 20_n defining the steering capability 31_1), i.e. steering capability modes 32_1 to 32_m, each representing a respective decreasing steering capatility. Thus, the data processing apparatus 13 will obtain data indicative of the steering system 1 reaching a steering capability limit of a steering capability mode 32_1 to 32_m of the steering capability 31_1 that indicates a critical, faulty, and/or unreliable operation of the steering system 1. In response to obtaining the data, the data processing apparatus 13 will cause a corresponding feedback to the driver via a torque of a steering wheel 11 of the vehicle for informing the driver that the operation of the steering system 1 is critical, faulty, and/or unreliable.

In the following some of possible examples concerning the implementation of the method of the present disclosure will be explained.

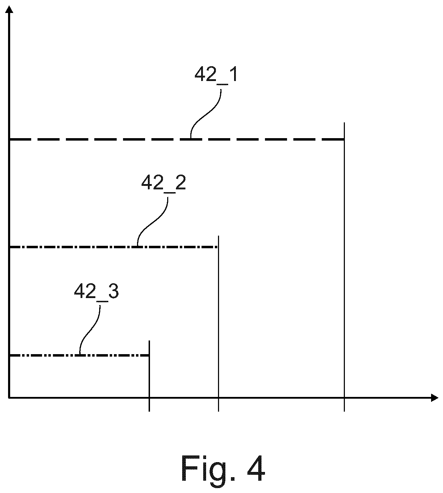

Figure 4 shows exemplary steering capability modes 42_1, 42_2, and 42_3, wherein the vertical arrow of Figure 4 indicates the values of the steering capability and the horizontal arrow indicates operating time. In Figure 4, the steering capability modes 42_1, 42_2, and 42_3 are defined to fulfill at least one critical safety requirement of the steering system 1, wherein the at least one safety requirement may be defined by at least one steering capability factors 20_1, 20_2, ..., 20_n in set 20. In the example of Figure 4, steering capability modes 42_1, 42_2, and 42_3 are considered that are entered or present in case of at least one fault (or failure) in the steering system 1. Basically, backup modes may be viewed as operation modes plus a nominal functional operation mode.

In Figure 4, the steering capability modes 42_1, 42_2, and 42_3 may have different steering capabilities 21, 31_1 to 31_k due to a number of functional elements and, thus, factors 20_1, 20_2, ..., 20_n that may be taken into consideration. Thus, each steering capability mode 42_2 and 42_3 may not fulfil the same steering capability 21, 31_1 to 31_k as the previous steering capability mode 42_1 and 42_2. Additionally, in the example of Figure 4, each steering capability mode 42_1, 42_2, and 42_3 may further have a different target operation time. Following on from the above description, the steering capability mode 41_1 could be a mode with a good steering capability, e.g., it could be a fully functional mode or fully functional steering capability mode respectively; the steering capability mode 41_2 could be a mode with a steering capability that is less than the steering capability of the steering capability mode 41_1, e.g. it could be a degraded level 1 mode or degraded level 1 steering capability mode respectively; and the steering capability mode 41_3 could be a mode with a steering capability that is less than the steering capability of the steering capability mode 41_3, e.g. it could be a degraded level 2 mode or a degraded level 2 steering capability mode respectively.

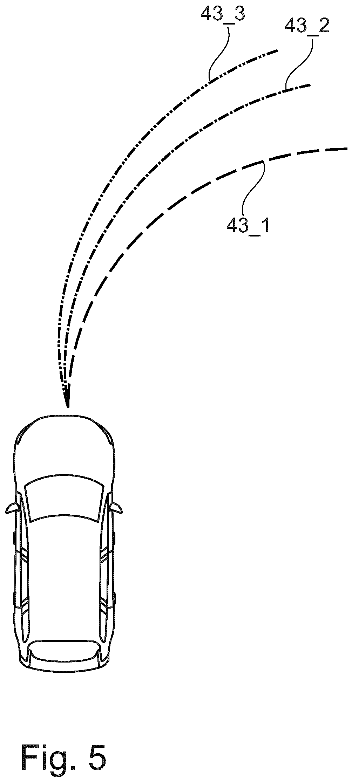

Figure 5 shows exemplary paths or trajectories respectively 43_1, 43_2, 43_3, which the vehicle may drive in the steering capability mode 42_1, 42_2, and 42_3. The steering capability mode 42_1, which may be a fully functional mode, for example, may have a driving path/trajectory 43_1, the steering capability mode 42_2, which may be a degraded level 1 mode, may have a driving path/trajectory 43_2, and the steering capability mode 42_3, which be a degraded level 2 mode, may have a driving path/trajectory 43_3.

In the examples of Figures 4 and 5, the steering capabilities 21, 31_1 to 31_k behind the steering capability modes 42_1, 42_2, and 42_3 may be expressed as a functions of factors such as maximum steering wheel speed, maximum steering angle and/or maximum steering rack speed and steering rack position. A steering capability 21, 31_1 to 31_k may also be a function on vehicle level and may be, for example, a function of max lateral acceleration in y-direction and maximum lateral jerk. This means that a steering capability 21, 31_1 to 31_k may also be a function of vehicle speed according to formula *lateral acceleration = V²* / *R*, where R is the vehicle turning radius and V is the speed of the vehicle.

In the examples of Figures 4 and 5, it may be the objective to ensure that, while steering system 1 is fail operation mode, the driver is steering within a next steering capability 21, 31_1 to 31_k of the next steering capability mode. In summary the driver is guided to steer within a specific steering capability 21, 31_1 to 31_k of a specific steering capability mode. The guidance is provided via the torque feedback.

For example, if the steering system 1 is in a fully functional mode 42_1 and data indicative of the steering system 1, reaching the steering capability limit of the (next lower) steering capability mode 42_2 is obtained, a corresponding torque feedback is provided.

Correspondingly, if the steering system 1 is in a degraded level 1, i.e. in the steering capability mode 42_2, it may be communicated to the driver via a torque feedback in a clear and safe way when the driver is steering outside degraded level 2 steering capability, i.e. outside the steering capability mode 42_3 due to the obtaining of data indicating that the steering capability limit of the (next lower) steering capability mode 21_3 (degraded level 2) is obtained. Thereby, it can be ensured that the driver is not fulfilling desired steering trajectory 43_3 in case of a fault.

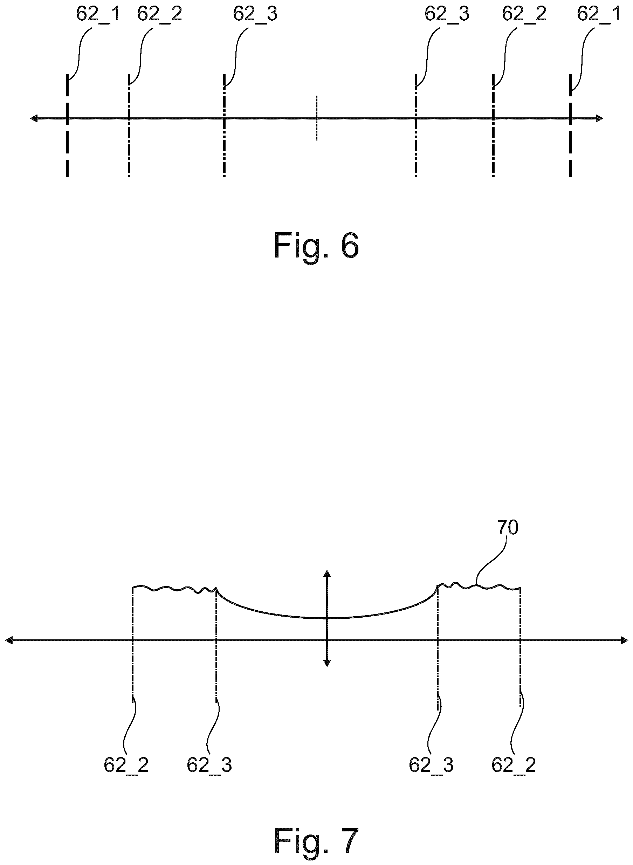

Figure 6 shows ranges of three exemplary steering capability modes 62_1, 62_2, 62_3 with regard to a steering capability 21, 31_1 to 31_k that is defined with regard to factors comprising maximal steering wheel angle and allowed steering wheel speed as a function of speed. The arrow in Figure 6 indicates values of steering wheel angles for the different steering capability modes 62_1, 62_2, 62_3 for a specific vehicle speed.

In case the driver is closing into one of these steering capability modes 62_1, 62_2, 62_3, which are applicable for "next" steering capability mode 62_1, 62_2, 62_3, the feedback torque might be build up to give notification to the driver that max steering capability 21, 31_1 to 31_k is almost reached. Furthermore, if the driver is steering outside a max steering capability mode of the steering capability modes 62_1, 62_2, 62_3, a steering vibration might be given to guide the driver to steer with less "aggressivity".

According to the present disclosure, a feedback, provided via a torque of a steering wheel 11 of the vehicle, or torque feedback respectively may comprise at least one of the following: causing increasing the torque of the steering wheel 11; causing increasing the torque of the steering wheel 11 proportional to a deviation of the currently measured value of the steering capability 21, 31_1 to 31_k from the steering capability limit; causing increasing the torque of the steering wheel 11 up to a torque limit; causing increasing the torque of the steering wheel 11 up to a torque limit and, if the torque limit is reached, causing a drop in the torque; and/or causing a vibration of the steering wheel 11.

Additionally, the feedback may further comprises at least one of the following: causing the vibration of the steering wheel 11 upon the increasing of the torque of the steering wheel 11; causing the vibration of the steering wheel 11 upon the increasing of the torque of the steering wheel 11 proportional to a deviation of the currently measured value of the steering capability 21, 31_1 to 31_k from the steering capability limit; causing the vibration of the steering wheel 11 upon the increasing of the torque of the steering wheel 11 up to a torque limit.

Furthermore, in addition to the aforesaid, the feedback may further comprise at least one of the following: causing decreasing the torque of the steering wheel 11 upon the increasing of the torque of the steering wheel 11; causing decreasing the torque of the steering wheel 11 upon the increasing of the torque of the steering wheel 11 proportional to a deviation of the currently measured value of the steering capability 21, 31_1 to 31_k from the steering capability limit; causing decreasing the torque of the steering wheel 11 upon the increasing of the torque of the steering wheel 11 up to a torque limit.

Moreover, the feedback may comprise causing the vibration of the steering wheel 11 upon the decreasing of the torque of the steering wheel 11.

Figure 7 exemplary visualizes the intensity or values 70 of the steering wheel torque provided as a feedback with regard to different steering wheel angle values as in Figure 6. Like the arrow in Figure 6, the arrow in Figure 7 indicates values of steering wheel angles for the different steering capability modes 62_2, 62_3 for a specific vehicle speed. Thus, the intensity or values 70 of the steering wheel torque provided as a feedback correspond to the respective steering capability modes 62_2, 62_3, with regard to which the torque feedback is provided.

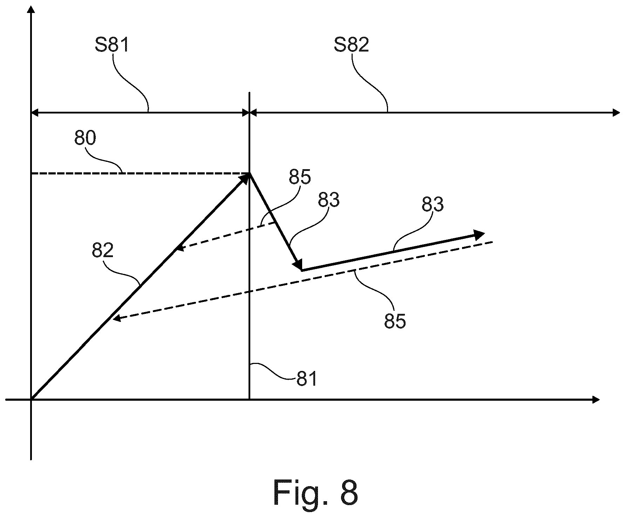

Figure 8 visualizes an example of a torque feedback provided according to an example of the present disclosure. As explained, the torque feedback is provided in response to obtaining data indicative of the steering system 1 reaching the steering capability limit of a steering capability mode of the at least two steering capability modes.

In the example of Figure 8, the vertical arrow indicates the value or intensity of the torque of the steering wheel 11 and the horizontal arrow indicates a deviation of a currently measured value of the steering capability 21, 31_1 to 31_k from a steering capability limit of a steering capability mode. Line 80 indicates an upper torque limit of the steering system 1, i.e. the maximal torque value or torque intensity that may be applied in the steering system 1 when providing the torque feedback.

The torque feedback may provided as a sequence of different phases or steps. In the example of Figure 8, in a first phase/step S81, the torque is increased (by loading the torque). The torque may increase proportional to the deviation 81 of the currently measured value of the steering capability 21, 31_1 to 31_k from the steering capability limit of the steering capability mode. Further, the torque may be increased up to the torque limit 80. The increasing (loading) of the torque is indicated by arrow 82.

In a second phase/step S82, a decreasing (by unloading) of the torque of the steering wheel 11 upon the increasing S81 of the torque of the steering wheel 11 is caused. The decreasing S82 may be performed by a sudden drop in the torque. In the example of Figure 8, the decreasing S82 of the torque of the steering wheel 11 may be performed upon the increasing S81 of the torque of the steering wheel 11 proportional to the deviation of the currently measured value of the steering capability 21, 31_1 to 31_k from the steering capability limit. Further, the decreasing S82 of the torque of the steering wheel may be performed upon the increasing S81 of the torque of the steering wheel 11 up to the torque limit 80. As mentioned, the decreasing S82 of the torque may be performed by unloading the torque, which is indicated by the broken lines 83 in Figure 8.

Further, when the torque is decreased S82, a vibration of the steering wheel 11 may be caused additionally. The vibration of the steering wheel 11 may be performed temporarily, e.g., when the sudden drop in the torque is performed and/or when the torque is unloaded. The vibration of the steering wheel 11 may be caused upon the increasing S81 of the torque of the steering wheel 11. The vibration of the steering wheel 11 may be caused upon the increasing S81 of the torque of the steering wheel 11 proportional to a deviation of the currently measured value of the steering capability 21, 31_1 to 31_k from the steering capability limit. The vibration of the steering wheel 11 may be caused upon the increasing S81 of the torque of the steering wheel 11 up to the torque limit 80.

Step S82 may be performed by loading and unloading the torque. In Figure 8, the loading of the torque in step S82 is indicated by solid lines 83, and the unloading of the torque in step S82 is indicated by broken lines 84.

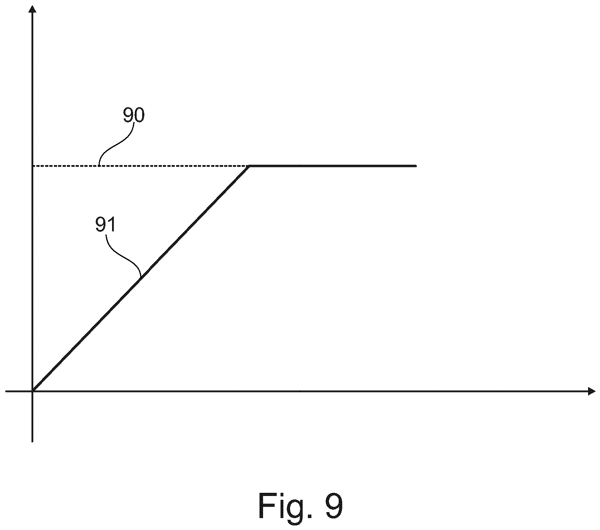

Figure 9 visualizes another example of a torque feedback provided according to an example of the present disclosure. As explained, the torque feedback is provided in response to obtaining data indicative of the steering system 1 reaching the steering capability limit of a steering capability mode 21_1, ..., 21_m, 32_1 to 32_m, 42_1, 42_2, 42_3, 62_1, 62_2, 62_3 of the at least two steering capability modes 21_1, ..., 21_m, 32_1 to 32_m, 42_1, 42_2, 42_3, 62_1, 62_2, 62_3. Like in Figure 8, also in Figure 9 the vertical arrow indicates the value or intensity of the torque of the steering wheel 11 and the horizontal arrow indicates a deviation of a currently measured value of the steering capability 21, 31_1 to 31_k from a steering capability limit of a steering capability mode 21_1, ..., 21_m, 32_1 to 32_m, 42_1, 42_2, 42_3, 62_1, 62_2, 62_3. Line 90 indicates an upper torque limit of the steering system 1, i.e. the maximal torque value or torque intensity that may be applied in the steering system 1 when providing the torque feedback.

In the example of Figure 9, the torque feedback may provided by increasing (e.g., loading) the torque, which is indicated by line 91. The torque may increase proportional to the deviation of the currently measured value of the steering capability 21, 31_1 to 31_k from the steering capability limit of the steering capability mode 21_1, ..., 21_m, 32_1 to 32_m, 42_1, 42_2, 42_3, 62_1, 62_2, 62_3. Further, the torque may be increased up to the torque limit 90. According to the example of Figure 9, the increasing of the torque ends upon reaching the torque limit 90. Upon reaching the torque limit 90, the level of torque in the torque feedback is maintained according to the example of Figure 9. The maintaining of the level of the torque may be performed, for example, for a predetermined time or until a failure or fault, which was a cause for the torque feedback, has been fixed.

Additionally, in the example of Figure 9, a vibration of the steering wheel 11 may be caused. The causing of the vibration of the steering wheel 11 may be, for example, upon the increasing of the torque of the steering wheel 11. The causing of the vibration of the steering wheel 11 may be upon the increasing of the torque of the steering wheel 11 up to the torque limit 90.

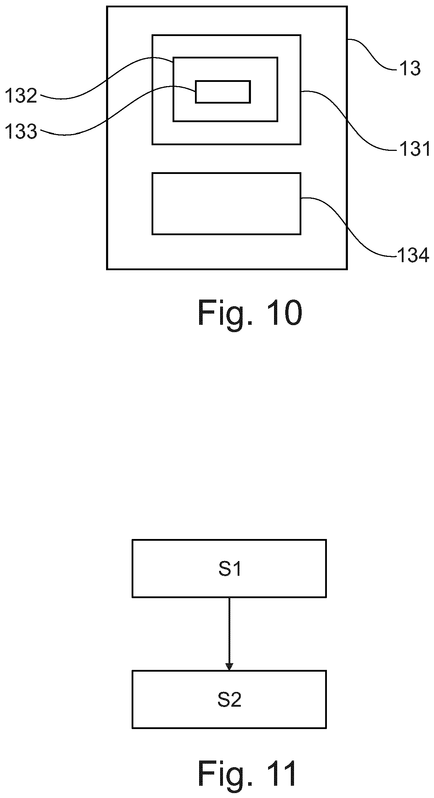

Figure 10 visualizes an arrangement of the data processing apparatus 13 according to an example of the present disclosure.

The data processing apparatus 13 may comprise a data storage unit 131 and a data processing unit 134.

The data storage unit 131 may comprise a computer-readable storage medium 132.

On the computer-readable storage medium 132, there may be provided a computer program 113.

The computer program 133 and, thus, also the computer-readable storage medium 132, may comprise instructions which, when executed by the data processing unit 114, or, more generally speaking, a computer, cause the computer or the data processing unit 114 to carry out a method for assisting a driver 31 of a vehicle 12 via a head-mounted portable system. The steps of the method are described exemplary above and are indicated also in Figure 11.

Figure 11 visualizes steps of a method according to an example of the present disclosure.

According to the example of Figure 11, in step S1, obtaining data indicative of the steering system 1 reaching the steering capability limit of a steering capability mode of the at least two steering capability modes is performed. Step S1 is performed as described above and may be performed by the data processing apparatus 13.

In step S2, in response to the obtaining of the data, a corresponding feedback to the driver is caused via a torque of a steering wheel 11 of the vehicle. Step S2 is performed as described above and may be performed by the data processing apparatus 13.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 1: steering system
- 10: steering wheel
- 12: wheel
- 13: data processing apparatus
- 131: data storage unit
- 132: computer-readable storage medium
- 133: computer program
- 134: data processing unit
- 20: set of steering capability factors
- 10_2, 20_2, ..., 20_n: steering capability factor
- 21: steering capability
- 21_1, ..., 21_m: at least two steering capability modes
- 22: steering capability values
- 31_1 to 31_k: steering capability
- 32_1 to 32_m: steering capability modes
- 42_1, 42_2, and 42_3: steering capability modes
- 43_1, 43_2, 43_3: steering trajectory
- 62_1, 62_2, 62_3: steering capability modes
- 70: intensity or values of a steering wheel torque feedback
- 80: torque limit of the steering system
- 81: deviation
- 82: increasing (loading) of the torque
- 83: unloading the torque
- 84: loading the torque
- 90: torque limit of the steering system
- 91: increasing (loading) of the torque
- S1: step of obtaining data indicative of steering system reaching a
- S2: steering capability limit of a steering capability mode step of causing a feedback to a driver via a torque of a steering wheel of a vehicle

## Claims

1. A method for operating a steering system (1) for a vehicle, wherein the steering system (1) is operable in at least two steering capability modes (21_1, ..., 21_m, 32_1 to 32_m, 42_1, 42_2, 42_3, 62_1, 62_2, 62_3), each steering capability mode (21_1, ..., 21_m, 32_1 to 32_m, 42_1, 42_2, 42_3, 62_1, 62_2, 62_3) **characterized by** at least one steering capability limit, wherein the method comprises:
- obtaining (S1) data indicative of the steering system (1) reaching the steering capability limit of a steering capability mode (21_1, ..., 21_m, 32_1 to 32_m, 42_1, 42_2, 42_3, 62_1, 62_2, 62_3) of the at least two steering capability modes (21_1, ..., 21_m, 32_1 to 32_m, 42_1, 42_2, 42_3, 62_1, 62_2, 62_3); and
- in response to obtaining (S1) the data, causing (S2) a corresponding feedback to the driver via a torque of a steering wheel (10) of the vehicle.

2. The method of claim 1, wherein the feedback comprises at least one of the following:
- causing increasing the torque of the steering wheel (10);
- causing increasing the torque of the steering wheel (10) proportional to a deviation from the steering capability limit;
- causing increasing the torque of the steering wheel (10) up to a torque limit;
- causing increasing the torque of the steering wheel (10) up to a torque limit and, if the torque limit is reached, causing a drop in the torque; and/or
- causing a vibration of the steering wheel (10).

3. The method of claim 2, wherein the feedback further comprises at least one of the following:
- causing the vibration of the steering wheel (10) upon the increasing of the torque of the steering wheel (10);
- causing the vibration of the steering wheel (10) upon the increasing of the torque of the steering wheel (10) proportional to a deviation from the steering capability limit;
- causing the vibration of the steering wheel (10) upon the increasing of the torque of the steering wheel (10) up to a torque limit.

4. The method of claim 2 or 3, wherein the feedback further comprises at least one of the following:
- causing decreasing the torque of the steering wheel (10) upon the increasing of the torque of the steering wheel (10);
- causing decreasing the torque of the steering wheel (10) upon the increasing of the torque of the steering wheel (10) proportional to a deviation from the steering capability limit;
- causing decreasing the torque of the steering wheel (10) upon the increasing of the torque of the steering wheel (10) up to a torque limit.

5. The method of claim 4, wherein the feedback further comprises causing the vibration of the steering wheel (10) upon the decreasing of the torque of the steering wheel (10).

6. The method of any one of the preceding claims, wherein, if the indication further indicates that the driver is steering outside a maximum steering capability limit of the at least one steering capability limit, the method further comprises providing to the driver a notification indicative of the steering outside the maximum steering capability limit and/or providing to the driver a steering guidance.

7. The method of any one of the preceding claims, wherein each steering capability limit of the at least one steering capability limit is defined by a corresponding vehicle speed and at least one of the following: corresponding vehicle turning radius, corresponding steering wheel angle, corresponding steering wheel angle speed, and/or corresponding lateral acceleration.

8. The method of any one of the preceding claims, wherein the at least two steering capability modes (21_1, ..., 21_m, 32_1 to 32_m, 42_1, 42_2, 42_3, 62_1, 62_2, 62_3) comprise a maximum steering capability mode (21_1, ..., 21_m, 32_1 to 32_m, 42_1, 42_2, 42_3, 62_1, 62_2, 62_3) and wherein the corresponding feedback is caused to the driver if the data is indicative of the steering system (1) reaching the steering capability limit of the steering capability mode (21_1, ..., 21_m, 32_1 to 32_m, 42_1, 42_2, 42_3, 62_1, 62_2, 62_3) that is different from the maximum steering capability mode (21_1, ..., 21_m, 32_1 to 32_m, 42_1, 42_2, 42_3, 62_1, 62_2, 62_3).

9. A data processing apparatus (13) comprising means for carrying out the method of any one of the preceding claims.

10. A computer program (133) comprising instructions which, when the program is executed by a computer, cause the computer to carry out the method any one of claims 1 to 8.

11. A computer-readable storage medium (132) comprising instructions which, when executed by a computer, cause the computer to carry out the method any one of claims 1 to 8.

12. A steering system (1) for a vehicle comprising a data processing apparatus (13) according to claim 9 or being configured for carrying out the steps of a method according to any one of claims 1 to 8.

13. A vehicle comprising a data processing apparatus (13) according to claim 9 or being configured for carrying out the steps of a method according to any one of claims 1 to 8.
